# EUROPÄISCHE PATENTSCHRIFT

(11) **EP 0 682 782 B1**
(45) Veröffentlichungstag und Bekanntmachung des Hinweises auf die Patenterteilung: **12.12.2001**
(21) Anmeldenummer: 94905727.7
(22) Anmeldetag: 28.01.1994
(51) Int. Cl.: G02F 1/1335, G09F 19/12

(54) **VERFAHREN UND VORRICHTUNG ZUR MODULATION VON BILDERN FÜR DIE DARSTELLUNG OPTISCHER EFFEKTE**
IMAGE MODULATION PROCESS AND DEVICE FOR GENERATING OPTICAL EFFECTS
PROCEDE ET DISPOSITIF DE MODULATION D'IMAGES AFIN DE GENERER DES EFFETS OPTIQUES

(30) Priorität: 03.02.1993 DE 4302945
(43) Veröffentlichungstag der Anmeldung: 22.11.1995
(73) Patentinhaber: PREHN, Horst, 35305 Grünberg (DE)
(72) Erfinder: PREHN, Horst, 35305 Grünberg (DE)
(74) Vertreter: Missling, Arne, Dipl.-Ing.
(86) Internationale Anmeldenummer: EP9400245
(87) Internationale Veröffentlichungsnummer: WO9418598

(56) Entgegenhaltungen:
- WO-A-91/09744
- DE-A- 2 247 389
- DE-A- 4 040 081
- Ichiro Fukuda et al. "Achromatic Supertwisted Nematic LCD Using Birefringent Film", Proceedings of the SID 30(1988), No. 3
- US 5,227,903 (CASIO) 13. Juli 1993

## Beschreibung

Die Erfindung betrifft ein Verfahren und eine Vorrichtung zur Modulation von Bildern für die Darstellung optischer Effekte mit von einer Lichtquelle ausgehender Strahlung, die über einen Polarisator polarisiert wird, einem als Analysator geschalteten Polarisator und einem zwischen Polarisator und Analysator in den Strahlengang angeordneten lichtdurchlässigen Objekt.

Die US 5,227,903 beschreibt eine Vorrichtung zur Modulation von Bildern, die alle Merkmale des Oberbegriffs aufweist. Die DE 40 40 081 A1 beschreibt einen stereoskopischen Projektor, der einen Polarisationsstrahlteiler und zwei Flüssigkristallzellen, die von jeweils einem Strahl einer Polarisationsrichtung passiert wird, besitzt.

Aufgabe der Erfindung ist es, dynamische Bilder zu erzeugen, welche in ihrer Struktur (Ortsfrequenz) und ggf. in ihrer Farbigkeit (Chromatizität) durch verschiedene niederfrequente Signalquellen modulier- bzw. steuerbar sind. Diese Bilder können entweder als Projektion, z. B. mit Hilfe einer Projektionsoptik (z. B. Dia-Projektor, Over-head-Projektor o. ä.) auf einem Schirm abgebildet werden oder aber im direkten Durchlicht betrachtet werden können (z. B. wie in einem Dia-Betrachter). Außerdem soll das Verfahren auch Stereo-Projektion bzw. Stereo-Betrachtung ermöglichen.

Die Aufgabe wird mit den Merkmalen der Ansprüche 1 und 13 gelöst.

Vorteilhaft besteht das Element aus einer optisch drehenden Flüssigkristall, wobei das Polarisationsverhalten des optischen Elementes durch elektrische, magnetische oder mechanische Einwirkung beeinflußt werden kann. Es ist auch denkbar, die Elemente aus einer nematischen Flüssigkeit mit chiralen Dotierungsstoffen herzustellen, wobei die Flüssigkeit entweder bewegt werden kann oder aber über Schall bzw. Ultraschall beaufschlagt wird. Letzteres hat den Vorteil, daß die stehenden Schallwellen zusätzlich in einfacher Art und Weise sichtbar gemacht werden können. Es ist auch möglich, die Flüssigkeit mit wechselnden und örtlich unterschiedlichen Temperaturen zu beaufschlagen, wodurch gleichfalls eine Bildveränderung im Sinne der Erfindung erhalten wird.

Vorteilhaft ist es, wenn in den Strahlengang ein Kollimator sowie ein Wärmeschutzfilter dann eingesetzt werden, wenn größere Lichtstärken übertragen werden sollen. Auch ist eine Abbildungs- oder Betrachtungsoptik für bestimmte Anwendungsfälle vorteilhaft.

Für das Verfahren gemäß der Erfindung bzw. für ein nach dem Verfahren gemäß der Erfindung arbeitende Vorrichtung ergibt sich eine vielfache Anwendungsmöglichkeit, so kann diese z. B. in der Beleuchtungstechnik benutzt werden, und zwar mit Vorteil dann, wenn es auf tonmodulierte oder signalmodulierte komplexe Farb- und Bilddynamik ankommt. Durch Einbringen der vorstehend genannten Elemente lassen sich höchst komplexe Farb- und Lichtdramaturgien inszenieren. Es ist somit möglich, komplette Bühnenlicht-Inszenierungen auf wenigen Elementen gemäß der Erfindung zu speichern und durch Signalquellen zu dynamisieren.

Der Vorteil gegenüber herkömmlichen Beleuchtungs- und Lichttechnik mit Lampenlicht liegt u. a. darin, daß sich mit äußerst geringem Aufwand durch die in den Elementen gespeicherte Lichtdramaturgie neue komplexe Beleuchtungsaufgaben vielgestaltig lösen lassen.

Die Erfindung bietet darüber hinaus auch eine Möglichkeit, in der opto-akustischen Stimulationstechnik (OAS) (sogenannte MIND-Machines). Mit den bisherigen OAS lassen sich bestimmte Bewußtseins- und Entspannungszustände auslösen. Dies geschieht bisher nur mit monochromem Licht von Leuchtdioden (Luminiszenzdioden), welche im bestimmten Verhältnis zum Tonsignal ausgesteuert werden. Mit dieser Erfindung lassen sich z. B. im Durchlicht mit der beschriebenen Stereo-3D-Brille die Audio-Signale der OAS-Systeme auf neue Art und Weise visualisieren. Es entstehen dreidimensionale meditative Farbräume mit neuen mentalen und ästhetischen Wirkungen.

Weitere vorteilhafte Anwendungen sind darin zu sehen, daß beispielsweise glasklare Scheiben als Informationsträger verwendet werden können, so daß diese nur für die Personen sichtbar wird, die eine entsprechende Filterbrille, d. h. einen Analysator, tragen. Diese Technik läßt sich vorteilhaft auch bei Kreditkarten einsetzen, wobei in einfacher und schneller Weise Daten erkannt und aufgenommen werden können. Des weiteren ist diese Technik auch für ein LC-Display von Interesse, das entsprechend vorbereitet ist. Der Vorteil besteht darin, daß die auf dem Display erscheinenden Informationen nur vom Betrachter mit Analysator wahrgenommen werden und nicht von den übrigen im Raum anwesenden Personen.

Weitere vorteilhafte Anwendungen sind bei der Realisierung farbiger LCD-Anzeigen (Displays) gegeben.

Nach dem erfindungsgemäßen Verfahren lassen sich nahezu beliebig komplexe farbige LC-Display-Anzeigen mittels der OAM optisch speichern und durch beliebige Signale elektronisch spezifisch ansteuern. Damit läßt sich eine große Vielfalt unterschiedlich gestalteter LCD-Anzeigen erreichen und einfach und schnell wechseln, indem
a) die z. B. als Einsteckrahmen ausgebildete OAM und/oder
b) die Steuersignale für die optoelektronische Flüssigkristallzelle (NC)
gewechselt werden. Damit lassen sich sowohl die farbgrafischen als auch die funktionalen Eigenschaften (Bildfolge) der LC-Displays gestalten. Der Vorteil zur herkömmlichen LC-Display-Technik besteht darin, daß grafisch komplexe und farbige Displayanzeigen mit einfachsten Mitteln realisierbar sind.

Mehrere Ausführungsbeispiele der Erfindung sind im folgenden anhand der Zeichnungen näher beschrieben, in dieser zeigen:
- Abb. 1: den optischen Strahlengang in einer erfindungsgemäß ausgebildeten Vorrichtung,
- Abb. 2: die elektrische Ansteuerung eines optisch wirkenden Elementes,
- Abb. 3: ein speziell ausgebildetes optisch wirkendes Element in Form eines Flüssigkristalles,
- Abb. 4: zwei Vorrichtungen gemäß der Erfindung, die parallel geschaltet und zu einer Stereobrille zusammengefaßt sind und
- Abb. 5: zwei Vorrichtungen mit vorgeschalteten Blenden gemäß der Erfindung, deren Strahlengänge optisch überlagert werden .

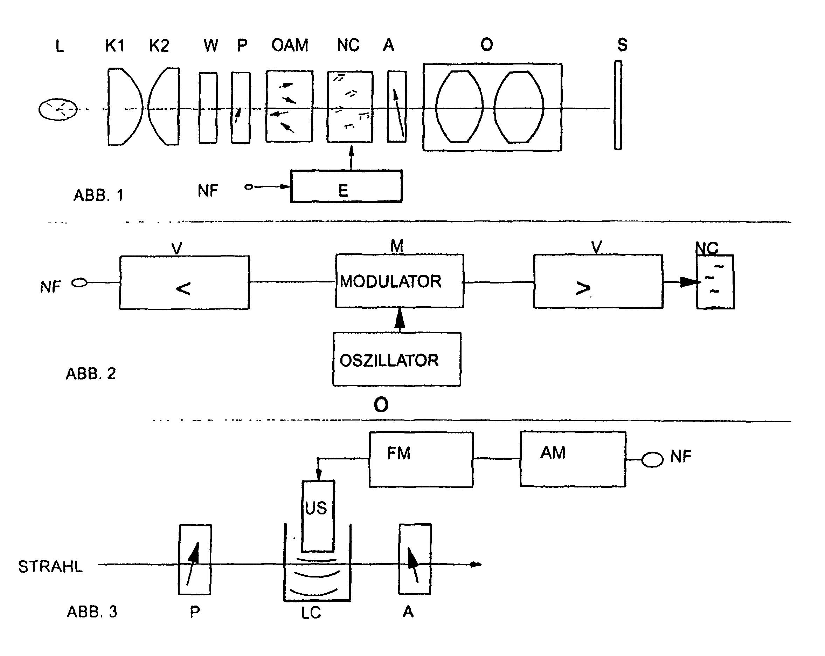

Bei der in Abb. 1 gezeigten erfindungsgemäßen Vorrichtung ist in einem optischen Strahlengang mit einer Lampe (L), einem Doppelkondensor (K₁, K₂) und einem Wärmeschutzfilter (W) in die Bildebene ein Polfilter (P) mit linearer Polarisierung eingebracht. Die Polarisationswinkel sind durch Drehung des Polfilters (P) einstellbar.

Dahinter wird ein optisch aktives Objekt, z. B. eine Matrix (OAM), in den Strahlengang eingebracht. Diese OAM besteht aus optisch drehenden Substanzen (ORD = optische Rotationsdispersion). Dies können entweder feste Stoffe, wie z. B. Plexiglas, oder verschieden geschichtete Kunststoffolien oder aber Flüssigkeiten mit optischer Drehung sein.

Diese OAM bildet das eigentliche Bild. Die Bildinformation liegt in der unterschiedlichen optischen Drehung der verwendeten Substanzen. Der OAM wird im Strahlengang dann ein optisch rotationsdispersives Element, z. B. eine Flüssigkristallzelle (Nematic Cell (NC)), nachgeschaltet. Mit der NC kann nun je nach Prinzip die optische Drehung entweder elektrisch, magnetisch oder mechanisch durch Ultraschall (US) orientiert werden. NC mit elektrischer Orientierung lassen sich durch ein elektrisches Feld dynamisch ansteuern. Dies geschieht z. B. mit einer Ansteuerelektronik (E) gemäß Abb. 2. Damit lassen sich z. B. NC mit elektrischer Orientierung durch ein beliebiges NF-Signal ansteuern. Die Einheit (E) besteht aus einem 500 Hz Oszillator oder Multivibrator, einem Modulator (M) und einem NF-Verstärker (V).

Damit lassen sich die NC mit NF-Modulation einer beliebigen Signalquelle aussteuern. Entsprechend ist bei Zellen mit magnetischer Orientierung zu verfahren.

Eine weitere Besonderheit stellt die Modulation einer flüssigen NC in Form einer Küvette mit Hilfe von Ultraschall dar. In einer Küvette (z. B. für Spektroskopie) befindet sich ein Flüssigkristall mit chiralen Dotierungsstoffen. Die Variation der optischen Drehung wird aufgrund einer Dichtemodulation mit frequenzmoduliertem Ultraschall, z. B. (30 kHz - 1 MHz), erreicht. Hierzu wird der Ultraschall-Kopf senkrecht zum Strahlengang in die Küvette eingekoppelt. Das durchstrahlende Licht wird aufgrund der Ultraschall-Frequenzmodulation (Frequenzmodulation = FM) optisch entsprechend moduliert. Die zusätzliche Amplitudenmodulation (AM) des Ultraschalls gestattet eine weitere Variabilität der optischen Effekte.

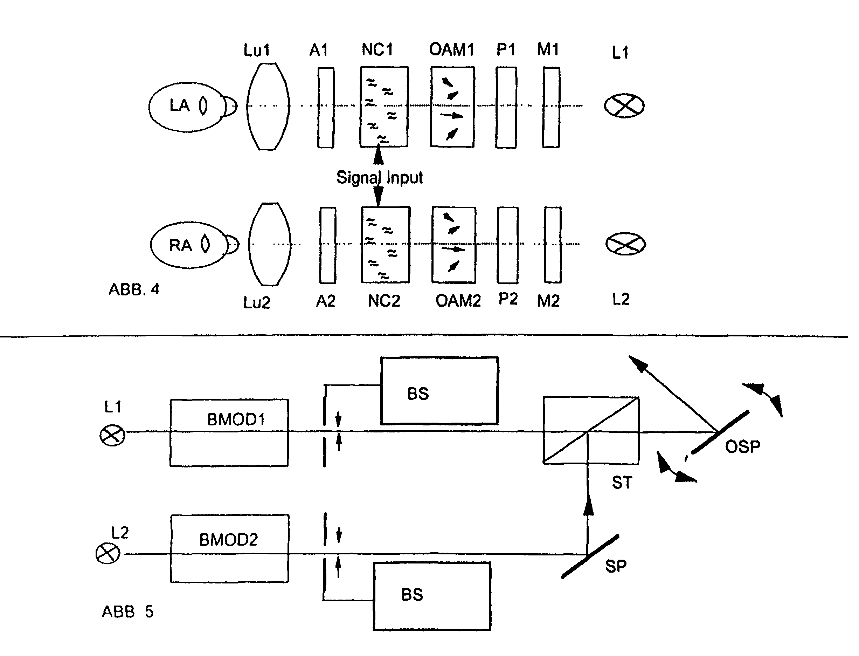

Der NC wird nun ein weiteres Polfilter (A) (linear polarisiert) als Analysator nachgeschaltet, wobei die Drehung des Polarisationswinkels durch Filterdrehung erreicht werden kann. Mit Hilfe eines Projektionsobjektivs (O) wird nun das Bild auf einen Schirm projiziert. Für die Anwendung in Durchsicht genügt der Aufbau B bestehend aus Lupe (Lu), P, OAM, NC, A, M (Mattglasscheibe), L. Bei Stereo-Betrachtung (Abb. 4) ist der Aufbau binokular auszuführen, wobei der Augenabstand regelbar sein sollte.

Abb. 5 zeigt zwei Bildmodulatoren (BMOD₁, BMOD₂), die über Lichtquellen (L₁, L₂) beleuchtet werden. In den Strahlengang sind zwei Blendenvorrichtungen (B₁, B₂) eingeschaltet, die über eine elektrooptische Blendensteuerung (BS) eingestellt werden.

Der Blendenvorrichtung (B₁) ist ein Strahlenteiler (ST) nachgeordnet, dem der Strahlengang des Bildmodulators (BMOD₂) zugeführt wird. Damit beide Bildmodulatoren parallel angeordnet werden können, ist ein Umlenkspiegel (SP) der Blende (B₂) nachgeordnet. Die Anzahl der Bildmodulatoren kann prinzipiell beliebig groß gewählt werden. Zur Positionierung des resultierenden Strahles dient eine ansteuerbare optische strahlpositionierungseinheit, die z. B. aus einem Piezospiegel bestehen kann.

## Patentansprüche

1. Vorrichtung zur Modulation von Bildern für die Darstellung optischer Effekte mit einer Lichtquelle (L), einem nachgeschalteten Polarisator (P), so daß die von der Lichtquelle ausgehende Strahlung polarisiert wird, einem in dem Strahlengang liegenden, dem Polarisator nachgeschalteten lichtdurchlässigen Objekt (OAM), einem in dem vom Objekt ausgehenden Strahlengang liegenden optischen, rotationsdispersiven Element (NC, LC), bei dem durch äußere Energiebeaufschlagung dessen optische Anisotropie räumlich und/oder zeitlich änderbar ist, und Mitteln, mit denen das Element entsprechend ansteuerbar ist,
**dadurch gekennzeichnet, daß**
das lichtdurchlässige Objekt die Bildinformation aufweist, und daß das lichtdurchlässige Objekt aus mehreren, flüssigen oder festen Substanzen unterschiedlicher optischer Aktivität besteht und mehrere nebeneinanderliegende Bereiche aufweist, die jeweils eine unterschiedliche Drehung der Polarisationsrichtung des einfallenden Lichtes bewirken, so daß die Bildinformation durch die unterschiedliche optische Drehung der Bereiche gegeben ist.

2. Vorrichtung nach Anspruch 1, **dadurch gekennzeichnet, daß** das Element (NC) ein optisch drehendes Flüssigkristall ist.

3. Vorrichtung nach Anspruch 2, **dadurch gekennzeichnet, daß** das Element (NC) in seinem optischen Polarisationsverhalten durch elektrische, magnetische oder mechanische Einwirkung beeinflußbar ist.

4. Vorrichtung nach Anspruch 2, **dadurch gekennzeichnet, daß** das Element aus einem nematischen Flüssigkristall mit chiralen Dotierungsstoffen besteht.

5. Vorrichtung nach einem der Ansprüche 1 bis 4, **dadurch gekennzeichnet, daß** in dem Strahlengang eine Abbildungs- oder Betrachtungsoptik (O) angeordnet ist.

6. Vorrichtung nach Anspruch 5, **dadurch gekennzeichnet, daß** in dem Strahlengang ein Kollimator (K), ein Wärmeschutzfilter (W), eine Projektionsoptik (O) jeweils einzeln oder zusammen angeordnet sind.

7. Vorrichtung zur optischen Darstellung von Stereobildern, bei der zwei Vorrichtungen nach einem der Ansprüche 1 bis 6 parallel geschaltet sind.

8. Vorrichtung nach Anspruch 7, bei der zur Überlagerung mehrerer bildmodulierter optischer Strahlengänge zweier oder mehrerer Signalquellen in den ersten und gegebenenfalls jeden weiteren Strahlengang ein Strahlenteiler (ST) und in den letzten Strahlengang entweder ein Strahlenteiler (ST) oder ein Spiegel (SP) angeordnet ist.

9. Vorrichtung nach einem der Ansprüche 1 bis 8, **dadurch gekennzeichnet, daß** zur Variation jedes Strahlenfeldes (Bildfeld) im Strahlengang mindestens eine optische Blendenvorrichtung (B₁, B₂) angeordnet ist, welche mechanisch, elektrisch, elektromagnetisch oder elektrooptisch ansteuerbar ist.

10. Vorrichtung nach Anspruch 9, **dadurch gekennzeichnet, daß** die Blendenvorrichtung (B₁, B₂) in Form einer variablen Maske (M₁, M₂) ausgebildet ist.

11. Vorrichtung nach einem der Ansprüche 1 bis 10, **dadurch gekennzeichnet, daß** zur Ablenkung oder Abtastung des optischen Strahls eine optische Strahlpositionierungseinrichtung (OSP) vorgesehen ist, welche mechanisch, elektrisch, elektromagnetisch oder elektrooptisch ansteuerbar ist.

12. Verfahren zur Modulation von Bildern für die Darstellung optischer Effekte mit einer Vorrichtung nach Anspruch 1, bei dem durch äußere Energiebeaufschlagung des optisch, rotationsdispersiven Elements dessen optische Anisotropie räumlich und/oder zeitlich geändert wird und damit eine Modulation des von dem Objekt (OAM) erzeugten Bildes erhalten wird.

13. Verfahren nach Anspruch 12, **dadurch gekennzeichnet, daß** das Element (NC) als optisch drehende Flüssigkristallzelle ausgebildet ist.

14. Verfahren nach Anspruch 13, **dadurch gekennzeichnet, daß** das Element (NC) in seinem Polarisationsverhalten durch elektrische, magnetische oder mechanische Einwirkung beeinflußt wird.

15. Verfahren nach Anspruch 13, **dadurch gekennzeichnet, daß** das Element (LC) aus einem nematischen Flüssigkristall mit chiralen Dotierungsstoffen besteht.

16. Verfahren nach Anspruch 15, **dadurch gekennzeichnet, daß** der Flüssigkristall bewegt wird.

17. Verfahren nach Anspruch 15 oder 16, **dadurch gekennzeichnet, daß** der Flüssigkristall mit Schall bzw. Ultraschall beaufschlagt wird.

18. Verfahren nach einem der Ansprüche 15 bis 17, **dadurch gekennzeichnet, daß** die Flüssigkeit mit wechselnden Temperaturgradienten beaufschlagt wird.

19. Verfahren nach einem der Ansprüche 12 bis 18, **dadurch gekennzeichnet, daß** in dem Strahlengang eine Abbildungs- oder Betrachtungsoptik (K,O) eingeschaltet wird.

20. Verfahren nach Anspruch 19, **dadurch gekennzeichnet, daß** in dem Strahlengang ein Kollimator (K), ein Wärmeschutzfilter (W), eine Projektionsoptik (O) jeweils einzeln oder zusammen eingeschaltet sind.

21. Verfahren zur optischen Darstellung von Stereobildern, bei dem eine Vorrichtung nach Anspruch 7 verwendet wird.

22. Verfahren nach Anspruch 21, **dadurch gekennzeichnet, daß** zwei oder mehrere Strahlengänge optisch vollständig oder partiell überlagert werden.

23. Verfahren nach Anspruch 22, **dadurch gekennzeichnet, daß** jedes Element durch unterschiedliche äußere Beaufschlagungen variiert wird.

## Claims

1. A device for the modulation of images for the generation of optical effects, comprising a light source (L), a polariser (P) arranged downstream so that the radiation emitted by the light source is polarised, a translucent object (OAM) arranged downstream of the polariser and lying in the beam path, an optical, rotationally dispersive element (NC, LC) lying in the beam path emanating from the object, the optical anisotropy of the element being spatially and/or temporally variable by the action of external energy, and means by which the element is appropriately activatable, **characterised in that** the translucent object contains the image information and **in that** the translucent object comprises a plurality of liquid or solid substances of differing optical activity and has a plurality of regions lying side by side which each effect different rotation of the polarisation direction of the incident light, with the result that the image information is provided by the differing optical rotation of the regions.

2. A device according to claim 1, **characterised in that** the element (NC) is an optically rotating liquid crystal.

3. A device according to claim 2, **characterised in that** the optical polarisation behaviour of the element (NC) can be influenced by electrical, magnetic or mechanical action.

4. A device according to claim 2, **characterised in that** the element comprises a nematic liquid crystal with chiral doping materials.

5. A device according to any one of claims 1 to 4, **characterised in that** an imaging or viewing lens (O) is arranged in the beam path.

6. A device according to claim 5, **characterised in that** a collimator (K), a heat protection filter (W) and a projection lens (O) are arranged either separately or together in the beam path.

7. A device for the optical generation of stereoimages, wherein two devices according to any one of claims 1 to 6 are connected in parallel.

8. A device according to claim 7, wherein, for the superimposition of a plurality of image-modulated, optical beam paths from two or more signal sources, a beam splitter (ST) is arranged in the first and, if applicable, each further beam path, and either a beam splitter (ST) or a mirror (SP) is arranged in the last beam path.

9. A device according to any one of claims 1 to 8, **characterised in that**, to vary each beam field (image field), at least one optical aperture device (B₁, B₂) is arranged in the beam path and is mechanically, electrically, electromagnetically or electro-optically activatable.

10. A device according to claim 9, **characterised in that** the aperture device (B₁, B₂) is in the form of a variable mask (M₁, M₂).

11. A device according to any one of claims 1 to 10, **characterised in that**, to deflect or scan the optical beam, an optical beam positioning arrangement (OSP) is provided which is mechanically, electrically, electromagnetically or electro-optically activatable.

12. A method of modulating images for the generation of optical effects using a device according to claim 1, wherein the optical anisotropy of the optical, rotationally dispersive element is spatially and/or temporally varied by the action of external energy, and the image generated by the object (OAM) is thus modulated.

13. A method according to claim 12, **characterised in that** the element (NC) is formed as an optically rotating liquid crystal cell.

14. A method according to claim 13, **characterised in that** the polarisation behaviour of the element (NC) can be influenced by electrical, magnetic or mechanical action.

15. A method according to claim 13, **characterised in that** the element (LC) comprises a nematic liquid crystal with chiral doping materials.

16. A method according to claim 15, **characterised in that** the liquid crystal is moved.

17. A method according to claim 15 or 16, **characterised in that** the liquid crystal is subjected to sonic or ultrasonic action.

18. A method according to any one of claims 15 to 17, **characterised in that** the liquid is subjected to changing temperature gradients.

19. A method according to any one of claims 12 to 18, **characterised in that** an imaging or viewing lens (K, O) is arranged in the beam path.

20. A method according to claim 19, **characterised in that** a collimator (K), a heat protection filter (W) and a projection lens (O) are arranged either separately or together in the beam path.

21. A method for the optical generation of stereoimages, wherein a device according to claim 7 is used.

22. A method according to claim 21, **characterised in that** two or more beam paths are completely or partially optically superimposed.

23. A method according to claim 22, **characterised in that** each element is varied by different external influences.

## Revendications

1. Dispositif de modulation d'images pour la présentation d'effets optiques, avec une source de lumière (L), un polariseur (P) installé en aval de sorte que le rayonnement sortant de la source de lumière soit polarisé, un objet (OAM), transparent à la lumière, installé en aval du polariseur, placé dans le trajet des rayons, un élément (NC, LC) optique à dispersion de rotation, situé dans le trajet de rayons sortant de l'objet, élément pour lequel, par une excitation énergétique extérieure, son anisotropie optique est modifiable spatialement et/ou temporellement, et des moyens à l'aide desquels l'élément est susceptible d'être commandé de manière correspondante,
**caractérisé en ce que**
l'objet transparent à la lumière présente l'information d'image, et **en ce que** l'objet transparent à la lumière est constitué d'une pluralité de substances liquides ou solides, ayant des activités optiques différentes, et présente une pluralité de zones situées les unes à côtés de autres, qui provoquent chacune une rotation différente de la direction de polarisation de la lumière incidente, de manière que l'information image soit fournie par une rotation optique différente des zones.

2. Dispositif selon la revendication 1, **caractérisé en ce que** l'élément (NC) est un cristal liquide à rotation optique.

3. Dispositif selon la revendication 2, **caractérisé en ce que** l'élément (NC) susceptible est d'être influencé quant à son comportement en polarisation optique, par un effet électrique, magnétique ou mécanique.

4. Dispositif selon la revendication 2, **caractérisé en ce que** l'élément est constitué d'un cristal liquide nématique, comportant des substances dopantes chirales.

5. Dispositif selon l'une des revendications 1 à 4, **caractérisé en ce qu'**une optique d'illustration ou d'observation (O) est disposée dans le trajet des rayons.

6. Dispositif selon la revendication 5, **caractérisé en ce qu'**un collimateur (K), un filtre de protection contre la chaleur (W), une optique de projection (O) sont disposés, chaque fois individuellement ou conjointement, dans le trajet des rayons.

7. Dispositif pour la présentation optique d'images stéréoscopiques, dans lequel deux dispositifs selon l'une des revendications 1 à 6 sont installés en parallèle.

8. Dispositif selon la revendication 7, dans lequel, pour effectuer la superposition d'une pluralité de trajets de rayons optiques, à modulation d'images, de deux sources de signaux ou plus, un diviseur de rayons (ST) est disposé dans le premier et, le cas échéant, dans chaque autre chemin de rayons et, soit un diviseur de rayons (ST), soit un miroir (SP), est disposé dans le dernier chemin de rayons.

9. Dispositif selon l'une des revendications 1 à 8, **caractérisé en ce que**, pour produire une variation de chaque champ de rayonnement (champ image), dans le trajet des rayons est disposé au moins un diaphragme, susceptible d'être commandé mécaniquement, électriquement, électromagnétiquement ou électro-optiquement.

10. Dispositif selon la revendication 9, **caractérisé en ce que** le diaphragme (B₁, B₂) est réalisé sous la forme d'un masque (M₁, M₂) variable.

11. Dispositif selon l'une des revendications 1 à 10, **caractérisé en ce que**, pour dévier ou pour produire un balayage du rayon optique, est prévu un dispositif optique de positionnement de rayons (OSP), susceptible d'être commandé mécaniquement, électriquement, électromagnétiquement ou électro-optiquement.

12. Procédé de modulation d'images pour la présentation d'effets optiques avec un dispositif selon la revendication 1, dans lequel, par une excitation énergétique extérieure de l'élément optique à dispersion de rotation, son anisotropie est modifiée spatialement et/ou temporellement et, ainsi, une modulation de l'image générée par l'objet (OAM) est obtenue.

13. Procédé selon la revendication 12, **caractérisé en ce que** l'élément (NC) est réalisé sous forme d'un cristal liquide à rotation optique.

14. Procédé selon la revendication 13, **caractérisé en ce que** l'élément (NC) est susceptible d'être influencé, quant à son comportement en polarisation optique, par un effet électrique, magnétique ou mécanique.

15. Procédé selon la revendication 13, **caractérisé en ce que** l'élément (LC) est constitué d'un cristal liquide nématique comportant des substances de dopage chirales.

16. Procédé selon la revendication 15, **caractérisé en ce** le cristal liquide est soumis à un mouvement.

17. Procédé selon la revendication 15 ou 16, **caractérisé en ce que** le cristal liquide est excité par un son ou un ultrason.

18. Procédé selon l'une des revendications 15 à 17, **caractérisé en ce que** le liquide est excité par des alternances de gradients de température.

19. Procédé selon l'une des revendications 12 à 18, **caractérisé en ce qu'**une optique d'illustration ou d'observation (K,O) est installée dans le trajet des rayons.

20. Procédé selon la revendication 19, **caractérisé en ce qu'**un collimateur (K), un filtre de protection contre la chaleur (W), une optique de projection (O) sont disposés, chaque fois individuellement ou conjointement, dans le trajet des rayons.

21. Procédé de présentation optique d'images stéréoscopiques, dans lequel un dispositif selon la revendication 7 est utilisé.

22. Procédé selon la revendication 21, **caractérisé en ce que** deux trajets de rayons, ou plus, sont superposés optiquement, complètement ou partiellement.

23. Procédé selon la revendication 22, **caractérisé en ce que** chaque élément est soumis à variation par des excitations extérieures différentes.
